# EUROPÄISCHE PATENTSCHRIFT

(11) **EP 1 634 641 B1**
(45) Veröffentlichungstag und Bekanntmachung des Hinweises auf die Patenterteilung: **17.06.2009**
(21) Anmeldenummer: 05019386.1
(22) Anmeldetag: 07.09.2005
(51) Int. Cl.: B01F 7/16, B01J 2/10

(54) **Hubeinrichtung für den Rotor eines Granulators**
Device for elevating an impeller of a granulator
Dispositif pour soulever le rotor d'un granulateur

(30) Priorität: 11.09.2004 DE 102004043971
(43) Veröffentlichungstag der Anmeldung: 15.03.2006
(73) Patentinhaber: Glatt Systemtechnik GmbH, 01277 Dresden (DE)
(72) Erfinder: Pritzke, Heinz, 01737 Kesselsdorf/OT Braunsdorf (DE); Knorr, Wolfgang, 01257 Dresden (DE)
(74) Vertreter: Pätzelt, Peter

(56) Entgegenhaltungen:
- EP-A- 0 385 956
- DE-A1- 3 334 543
- DE-A1- 3 337 830
- US-A- 4 511 093
- PATENT ABSTRACTS OF JAPAN Bd. 1999, Nr. 03, 31. März 1999 (1999-03-31) -& JP 10 314572 A (FUKAE KOGYO KK), 2. Dezember 1998 (1998-12-02)

## Beschreibung

Die Erfindung betrifft einen Granulator mit einem Rotor und einer Hubeinrichtung für den Rotor nach dem Oberbegriff des Anspruchs 1, insbesondere für pharmazeutische Anlagen.

Insbesondere in der pharmazeutischen Industrie werden an die maschinentechnischen Einrichtungen erhöhte Anforderungen in Bezug auf die Reinheit und besonders an die Möglichkeit zur einfachen und wirksamen Reinigung sowie Prüfung des Ergebnisses der Reinigung der Einrichtung gestellt.

In der Praxis werden zur Reinigung der Granulatoren oft die Rotoren demontiert oder der Rotor mit vertikaler Rotorachse ist an einem stationären Deckel gelagert und der Behälter des Granulators (Gehäuse), z.B. DE 101 26 783 A1, kann nach unten abgesenkt werden.

Bei Einrichtungen mit unten liegendem Drehantrieb und Rotoren, die relativ dicht am Boden des zugehörigen Behälters gelagert sind, ist es schwierig, alle Bereiche wirksam und effektiv zu reinigen. Für diese Ausführungen ist es bekannt, den Rotor innerhalb des Behälters anzuheben, damit die Reinigung oder Inspektion des Bereiches zwischen dem Rotor und dem Behälterboden erleichtert wird.

Unter der Internet-Adresse "www.diosna.de/eintopf_ detail.html" (02.09.2004) wird eine solche vorerwähnte Einrichtung gezeigt, bei der die Rotorwelle mit dem Rotor mittels Pneumatikzylinder gegenüber dem Behälter höhenverschiebbar ist.

In der JP 10 314 572 A (Abstract) wird eine Granuliereinrichtung angegeben, deren Rotorschaufeln schwenkbar an einer Antriebswelle gelagert sind. Die Anstellwinkel der Vorderflächen der Rotorschaufeln können verstellt werden. Dazu sind die Rotorschaufeln über Bolzen drehbar in einem zentralen Rotorelement gelagert. Über ein verschiebbares Verstellelement in der Antriebswelle können die Rotorschaufeln um den Bolzen verdreht werden.

Der Erfindung liegt als Aufgabe zugrunde, für einen Granulator mit unten liegendem Drehantrieb und einem Rotor, der relativ dicht am Boden des zugehörigen Behälters gelagert ist, eine Hubeinrichtung für den Rotor anzugeben, mit der der Rotor zur Reinigung des Granulators und nachfolgend zur Prüfung des Ergebnisses der Reinigung in einfacher Weise angehoben werden kann und dabei eine sichere und robuste Lagerung des Rotors gewährleistet ist.

Die Erfindung löst die Aufgabe durch die im Anspruch 1 angegebenen Merkmale. Vorteilhafte Weiterbildungen der Erfindung sind in den Unteransprüchen angegeben und werden nachstehend zusammen mit der Beschreibung der bevorzugten Ausführung der Erfindung, einschließlich der Zeichnung, näher dargestellt.

Die erfindungsgemäße Hubeinrichtung ist für Granulatoren vorgesehen, bei denen der Rotor über eine Antriebswelle mit einer außerhalb des Behälters angeordneten Dreheinrichtung gekoppelt ist. Die Hubeinrichtung weist eine. Hubstange auf, die innerhalb der Antriebswelle axial verschiebbar gelagert ist. Die Hubstange ist mit dem Rotor verbunden, wobei der Rotor gegenüber der Antriebswelle axial verschiebbar ist. Es ist auch möglich, dass die Hubstange während des Granulieren vom Rotor entkoppelt ist und nur zum Anheben mit dem Rotor derart gekoppelt wird, dass der Rotor gegenüber der Antriebswelle verschoben werden kann.

In vorteilhafter Weise kann die Hubstange auch innerhalb der Antriebswelle verdrehfest gelagert und der Rotor innerhalb des Behälters direkt an der Hubstange befestigt sein. In diesem Fall dreht die Hubstange gemeinsam mit der Antriebswelle und das Drehmoment wird gemeinsam von der Antriebswelle mit der Hubstange übertragen.

Die obere Endstellung des Rotors gegenüber dem Boden des Behälters ist in vorteilhafter Weise durch die oberste Stellung der Hubstange begrenzt. Die gegenüber dem Boden des Behälters unterste Stellung des Rotors kann durch die Antriebswelle oder durch die Hubstange begrenzt sein.

Die Antriebseinrichtung der Hubeinrichtung kann in verschiedener Weise ausgeführt sein. Räumlich ist sie gegenüber dem Behälter unterhalb der Dreheinrichtung angeordnet. Die axiale Bewegung der Hubstange kann mit beliebigen Mitteln manuell, pneumatisch, elektrisch oder elektromechanisch bewirkt werden.

In der Praxis hat es sich als besonders vorteilhaft erwiesen, wenn der Rotor in Achsnähe einen glockenartigen Mantel aufweist, der im Betriebszustand des Granulators die mechanischen Mittel im Bereich der Durchdringung der Antriebswelle durch den Boden des Behälters überdeckt. Dabei kann zwischen der Innenwand des glockenartigen Mantels und der Lagerung der Antriebswelle eine Dichtung, z.B. eine Lippendichtung vorhanden sein, damit dieser Bereich nur minimal verschmutzt wird.

Die Erfindung wird nachstehend an einem Ausführungsbeispiel näher erläutert.

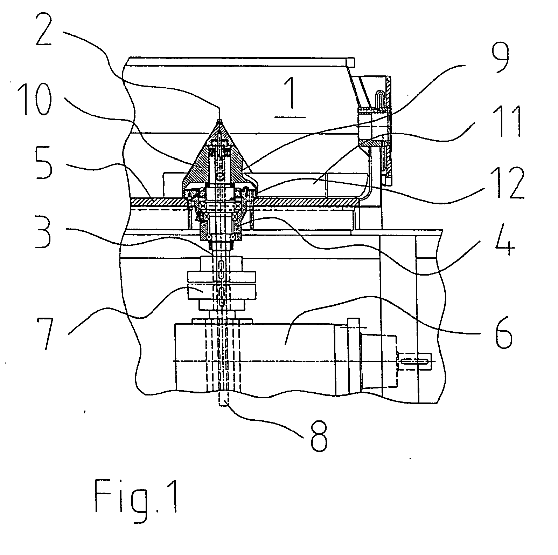

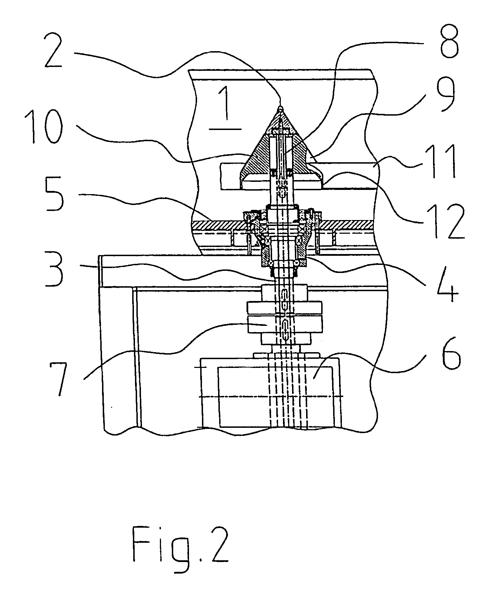

Die Zeichnung zeigt eine Hubeinrichtung für den Rotor eines Granulators für pharmazeutische Anlagen. Dabei zeigt Figur 1 die Einrichtung in der Granulierstellung und Figur 2 die gleiche Einrichtung in der Reinigungsstellung.

Der Granulator weist einen Behälter 1 auf, in dessen vertikaler Achse 2 eine Antriebswelle 3 innerhalb einer Rotorlagerung 4 den Boden 5 des Behälters 1 durchdringt. Unterhalb des Behälters 1 befindet sich das Getriebe 6 eines elektrischen Rotorantriebes. Das Drehmoment wird vom Getriebe 6 über eine Kupplung 7 auf die Antriebswelle 3 übertragen.

Die erfindungsgemäße Hubeinrichtung besteht aus einer Hubstange 8, die axial innerhalb der Antriebswelle 3 angeordnet ist. Im Beispiel ist die Hubstange 8 mittels Nut-Passfeder-Paarung innerhalb der Antriebswelle 3 verdrehfest gelagert. Die axiale Bewegung der Hubstange 8 wird über ein in der Zeichnung nicht dargestelltes Hubspindel-Getriebe realisiert. Das Hubspindel-Getriebe weist dabei Justiermittel auf, mit denen die obere und untere Endstellung der Hubstange 8 genau eingestellt werden kann.

Die Hubstange 8 durchdringt die Antriebswelle 3 und im Inneren des Behälters 1 ist am oberen Ende der Hubstange 8 der Rotor 9 verdrehfest angeordnet. Der Rotor 9 weist zentrisch eine kegelförmige Nabe 10 auf, an der radial Rotorschaufeln 11 befestigt sind. Im unteren Bereich der Nabe 10 ist ein Ring 12 vorgesehen, der im Betriebszustand des Granulators (Fig. 1) die mechanischen Mittel der Rotorlagerung 4 im Bereich der Durchdringung des Rotors durch den Boden 5 des Behälters 1 glockenartig überdeckt.

In Fig. 1 ist die Einrichtung 1 in der Granulierstellung dargestellt. Der Rotor 9, welcher verdrehfest an der Hubstange 8 gelagert ist, befindet sich in seiner untersten Stellung. Das Drehmoment wird dabei vom Getriebe 6 über die Antriebswelle 3 auf die Hubstange 8 und den Rotor 9 übertragen.

In Fig. 2 ist die Einrichtung 1 in der Reinigungsstellung dargestellt. Die Hubstange 8 ist innerhalb der Antriebswelle 3 mit dem Rotor 9 axial nach oben verschoben, derart dass der Bereich zwischen dem Rotor 9 und dem Boden 5, einschließlich der Innenfläche des Ringes 12, problemlos gereinigt und/oder einer Inspektion unterzogen werden kann. In der Regel wird der Rotor 9 in dieser Stellung nicht bewegt.

Der Vorteil der erfindungsgemäßen Lösung besteht insbesondere darin, dass die Rotorlagerung sehr robust und sicher ausgeführt werden kann und im Betriebszustand der innere Bereich der Rotorlagerung in vorteilhafter weise vor Verunreinigung geschützt werden kann. Der axiale Hub des Rotors 9 kann praktisch unbegrenzt an das technische Erfordernis einer gründlichen Reinigung angepasst werden.

Die Erfindung ist selbstverständlich nicht auf das beschriebene Ausführungsbeispiel beschränkt. So ist es ohne weiteres möglich, soweit gewünscht, die Lage der Achse 2 gegenüber der Vertikalen zu verändern.

## Patentansprüche

1. Granulator mit einem Rotor und einer Hubeinrichtung für den Rotor, wobei der Rotor über eine Antriebswelle mit einer außerhalb des Behälters angeordneten Dreheinrichtung gekoppelt ist, **dadurch gekennzeichnet, dass**
- die Hubeinrichtung eine Hubstange (8) aufweist,
- die axial verschiebbar innerhalb der Antriebswelle (3) gelagert ist,
- dass die Hubstange (8) mit dem Rotor (9) verbunden ist oder mindestens zum Anheben verbunden werden kann
- und dass der Rotor (9) gegenüber der Antriebswelle (3) axial verschiebbar ist.

2. Granulator nach Anspruch 1, **dadurch gekennzeichnet, dass** die Hubstange (8) innerhalb der Antriebswelle (3) verdrehfest gelagert ist und der Rotor (9) innerhalb des Behälters (1) verdrehfest an der Hubstange (8) befestigt ist.

3. Granulator nach Anspruch 1 oder 2, **dadurch gekennzeichnet, dass** die gegenüber dem Boden (5) des Behälters (1) oberste Stellung des Rotors (9) durch die oberste Stellung der Hubstange (8) begrenzt ist.

4. Granulator nach Anspruch 1 oder 2, **dadurch gekennzeichnet, dass** die gegenüber dem Boden (5) des Behälters (1) unterste Stellung des Rotors (9) durch die Antriebswelle (3) oder die Hubstange (8) begrenzt ist.

5. Granulator nach einem der Ansprüche 1 bis 4, **dadurch gekennzeichnet, dass** die Hubeinrichtung eine Antriebseinrichtung aufweist, die gegenüber dem Behälter (1) unterhalb der Dreheinrichtung angeordnet ist.

6. Granulator nach einem der Ansprüche 1 bis 4, **dadurch gekennzeichnet, dass** der Rotor (9) einen Ring (12) aufweist, der im Betriebszustand des Granulators die mechanischen Mittel im Bereich der Durchdringung des Rotors (9) durch den Boden (5) des Behälters (1) glockenartig überdeckt.

## Claims

1. Granulator with a rotor and with a lifting device for the rotor, the rotor being coupled by a drive shaft to a rotary device arranged outside the container, **characterized in that**
- the lifting device has a lifting rod (8), and
- which is mounted axially displaceably within the drive shaft (3),
- the lifting rod (8) is connected to the rotor (9) or can be connected at least for lifting, and
- the rotor (9) is axially displaceable with respect to the drive shaft (3).

2. Granulator according to Claim 1, **characterized in that** the lifting rod (8) is mounted fixedly in terms of rotation within the drive shaft (3), and the rotor (9) is fastened fixedly in terms of rotation to the lifting rod (8) within the container (1).

3. Granulator according to Claim 1 or 2, **characterized in that** the uppermost position of the rotor (9) with respect to the bottom (5) of the container (1) is limited by the uppermost position of the lifting rod (8).

4. Granulator according to Claim 1 or 2, **characterized in that** the lowermost position of the rotor (9) with respect to the bottom (5) of the container (1) is limited by the drive shaft (3) or the lifting rod (8).

5. Granulator according to one of Claims 1 to 4, **characterized in that** the lifting device has a drive device which is arranged below the rotary device with respect to the container (1).

6. Granulator according to one of Claims 1 to 4, **characterized in that** the rotor (9) has a ring (12) which, in the operating state of the granulator, covers the mechanical means in a bell-like manner in the region of the penetration of the rotor (9) through the bottom (5) of the container (1).

## Revendications

1. Granulateur doté d'un rotor et d'un dispositif pour soulever le rotor, le rotor étant couplé à un dispositif de rotation disposé à l'extérieur du réservoir par l'intermédiaire d'un arbre d'entraînement, **caractérisé en ce que :**
- le dispositif de levage comporte une tige de levage (8) ;
- ladite tige de levage est disposée de façon à pouvoir coulisser à l'intérieur de l'arbre d'entraînement (3) ;
- la tige de levage (8) est reliée au rotor (9) ou peut au moins être reliée à lui pour le levage ; et
- le rotor (9) peut coulisser dans le plan axial par rapport à l'arbre d'entraînement (3).

2. Granulateur selon la revendication 1, **caractérisé en ce que** la tige de levage (8) est disposée de façon à ne pouvoir être tordue à l'intérieur de l'arbre d'entraînement (3) et le rotor (9) est fixé à la tige de levage (8) de façon à ne pouvoir être tordu à l'intérieur du réservoir (1).

3. Granulateur selon la revendication 1 ou 2, **caractérisé en ce que** la position la plus haute du rotor (9) est délimitée par la position la plus haute de la tige de levage (8) au point le plus haut par rapport au plancher (5) du réservoir (1).

4. Granulateur selon la revendication 1 ou 2, **caractérisé en ce que** la position la plus basse du rotor (9) par rapport au plancher (5) du réservoir (1) est délimitée par l'arbre d'entraînement (3) ou la tige de levage (8).

5. Granulateur selon l'une quelconque des revendications 1 à 4, **caractérisé en ce que** le dispositif de levage comporte un dispositif d'entraînement disposé en dessous du dispositif de rotation par rapport au réservoir (1).

6. Granulateur selon l'une quelconque des revendications 1 à 4, **caractérisé en ce que** le rotor (9) comporte un anneau (12) qui recouvre comme une cloche les moyens mécaniques dans la zone où le rotor (9) traverse le plancher (5) du réservoir (1) dans l'état de fonctionnement du granulateur.
